# EUROPÄISCHE PATENTANMELDUNG

(11) **EP 0 723 099 A1**
(43) Veröffentlichungstag der Anmeldung: **24.07.1996**
(21) Anmeldenummer: 96100249.0
(22) Anmeldetag: 10.01.1996
(51) Int. Cl.: F16J 15/34

(54) **Gleitringdichtung für Kesselspeisepumpen**

(30) Priorität: 23.01.1995 DE 19501900
(71) Anmelder: KSB Aktiengesellschaft, D-67227 Frankenthal (DE)
(72) Erfinder: Sturm, Hans-Dieter, D-67229 Gerolsheim (DE)

(57) **Zusammenfassung**

Gegenstand der Erfindung ist eine Gleitringdichtung für Kesselspeisepumpen zur Förderung von Heißwasser mit einer Temperatur von über 100 °C.

Eine sichere, wenig aufwendige Abdichtung wird geschaffen durch eine gasgeschmierte Gleitringdichtung (1, 2), wobei auf eine Kühlung der Gleitringdichtung (1, 2) verzichtet wird und Mittel vorgesehen sind, die auf das abzudichtende Heißwasser in der Weise einwirken, daß es im Bereich der Gleitringdichtung (1, 2) nur noch in Dampfform vorliegt.

## Beschreibung

Die Erfindung betrifft eine Gleitringdichtung für Kesselspeisepumpen zur Förderung von Heißwasser mit einer Temperatur von über 100 °C.

Bisher werden Kesselspeisepumpen der genannten Art mit mechanischen Gleitringdichtungen ausgerüstet, die auch als hydrodynamische und thermohydrodynamische Dichtungen bezeichnet werden. Es handelt sich dabei um Dichtsysteme, bei denen eine Berührung oder zumindest eine partielle Berührung zwischen der rotierenden und der stationären Dichtfläche der Gleitringdichtung auftritt. Dabei ist vielfach in die die Gleitringdichtung aufnehmende Dichtungskammer eine Fördereinrichtung integriert, beispielsweise eine Förderschnecke, ein Pumpring oder eine Schleppscheibe, die einen zum größten Teil extern verlaufenden Wasserkreislauf zu der hier unverzichtbaren Kühlung der Gleitringdichtung antreibt. Notwendige Bestandteile dieses Kühlkreislaufes sind ein Wasser/Wasser-Wärmeaustauscher, Filtereinrichtungen, Armaturen und Überwachungsgeräte.

Bereits heute werden Kesselspeisepumpen hergestellt, die Gleitgeschwindigkeiten von mehr als 50 m/s im Bereich der Gleitringdichtung erreichen. Bei derart schnell laufenden Pumpen müssen aus dem Bereich der Gleitringdichtung Wärmeleistungen von weit über 20 kW abgeführt werden, um die Dichtung ausreichend zu kühlen. Nur bei ausreichender Kühlung ist sichergestellt, daß der Dichtspalt so weit wie möglich mit Wasser gefüllt ist und die Übergangsgrenze zur Dampfphase möglichst nahe am atmosphärenseitigen Spaltaustritt liegt.

Die abzuführende Wärmeleistung wird im wesentlichen durch drei Quellen gespeist:

Die Zylinderreibung der Dichtungsteile, die eigentliche Dichtspaltreibung und die Wärmeleitung der heißen Pumpenbauteile in Richtung des Dichtungsgehäuses.

Eine störungsfreie Funktion der Gleitringdichtung ist davon abhängig, daß die aus den verschiedenen Quellen stammende Wärme zuverlässig so weit reduziert wird, daß die Wassertemperatur im Dichtungsbereich nicht über ca. 50 bis 65 °C ansteigt.

Ein weiteres Problem ist bei Gleitringdichtungen dieser Bauart dadurch gegeben, daß Gasanteile im Fördermedium im Dichtlippenbereich auszentrifugiert werden und dadurch die unverzichtbare Kühlung der Dichtlippe so verschlechtern, daß die Gleitringdichtung durch thermische Überlastung vorgeschädigt wird, wenn nicht gar ausfällt.

Die der Erfindung zugrundeliegende Aufgabe besteht darin, den mit den geschilderten steigenden Anforderungen an die Gleitringdichtungen entstehenden Problemen mit einer Lösung zu begegnen, die nicht in einer weiteren Steigerung des vor allem für die Kühlung zu treibenden Aufwandes besteht, sondern den für einen sicheren Betrieb der Gleitringdichtung notwendigen Aufwand nach Möglichkeit reduziert.

Die gestellte Aufgabe wird erfindungsgemäß gelöst durch eine gasgeschmierte Gleitringdichtung, wobei auf eine Kühlung der Gleitringdichtung verzichtet wird und Mittel zur Absenkung des in der die Gleitringdichtung aufnehmenden Dichtungskammer herrschenden Druckes unter den Dampfdruck des geförderten Heißwassers vorgesehen sind.

Die Erfindung geht von folgender Überlegung aus:
Statt den für die Kühlung notwendigen Aufwand mit den steigenden Anforderungen zu erhöhen, können die für die geschilderte Problematik verantwortlichen Bedingungen genutzt werden, wenn anstelle einer flüssigkeitsgeschmierten Gleitringdichtung eine sogenannte Gasdichtung eingesetzt wird. Für den Betrieb einer solchen Dichtung muß lediglich sichergestellt werden, daß das abzudichtende Medium an der Gleitringdichtung in Dampfform vorliegt. Da dieses Medium Heißwasser ist, das bereits bei dem außerhalb der Kreiselpumpe herrschenden Druck verdampfen würde, bedarf es nur noch eines vergleichsweise geringen Aufwandes, um der geltenden Bedingung zu genügen. Ein teilweise extern verlaufender Kreislauf ist hierbei nicht mehr notwendig.

Der Anwender der Erfindung kann sich bei der Maßnahme, das abzudichtende Heißwasser in den gasförmigen Aggregatzustand zu versetzen, auf bekannte physikalische Vorgänge stützen. Zu beachten ist hierbei der Zusammenhang zwischen der Temperatur und dem Dampfdruck einer Flüssigkeit. So läßt sich die Verdampfung des Heißwassers sowohl durch die Zufuhr weiterer Wärme als auch durch eine Druckabsenkung erreichen. Die Unteransprüche nennen verschiedene Mittel zur Erzielung des genannten Zweckes, wobei diese Mittel einzeln oder in Kombination miteinander eingesetzt werden können.

Eines dieser Mittel besteht darin, zwischen dem Pumpeninneren und der Dichtungskammer der Gleitringdichtung eine hoch wirksame Drosselvorrichtung anzuordnen, deren Leckage kleiner ist als die Leckage der Gleitringdichtung, so daß der Druck vor der Gleitringdichtung durch Entspannung abgesenkt wird. Eine derartige Drosselvorrichtung kann beispielsweise durch eine radiale Spaltdichtung gebildet werden, wie sie durch den Prospekt "Radiale Spaltdichtung statt Labyrinth - bis zu 90 % weniger Leckage" der Firma Feodor Burgmann, Wolfratshausen bekannt geworden ist.

Der Druck in der Dichtungskammer kann auch durch eine Pumpeinrichtung abgesenkt werden. Hierzu ist zwischen dem Pumpeninneren und der Dichtungskammer eine Förderschnecke, ein Kreiselpumpenlaufrad oder eine mit Pumpbohrungen versehene Scheibe angeordnet, deren Förderung von der Dichtungskammer zum Pumpeninneren hin gerichtet ist.

Schließlich kann auch vor der Dichtungskammer eine Wärmequelle angeordnet sein, durch welche das abzudichtende Heißwasser vor seinem Übertritt in die Dichtungskammer in den Dampfzustand versetzt wird.

Die Verwendung gasgeschmierter Gleitringdichtungen in Kreiselpumpen ist grundsätzlich bekannt. So lehrt die DE 37 22 110 A 1 eine bei ungestörtem Betrieb einer Kreiselpumpe mitlaufende Hilfsdichtung, die durch Luft aus der umgebenden Atmosphäre geschmiert wird. Die Luft wird durch Schleppnuten in der Dichtfläche des umlaufenden Gleitringes in den Dichtspalt gefördert, wo sie ein Polster geringer Dicke bildet. Bei einem Ausfall der vorgeschalteten Hauptdichtung gelangt das Fördermedium der Kreiselpumpe zu der Hilfsdichtung, die nun als flüssigkeitsgeschmierte Gleitringdichtung arbeitet. Die während des ungestörten Betriebes in den Dichtspalt geführte Luft dient somit nicht der Abdichtung, sondern sie soll lediglich ein Anlaufen der Gleitringe dieser außer Funktion befindlichen Dichtung verhindern.

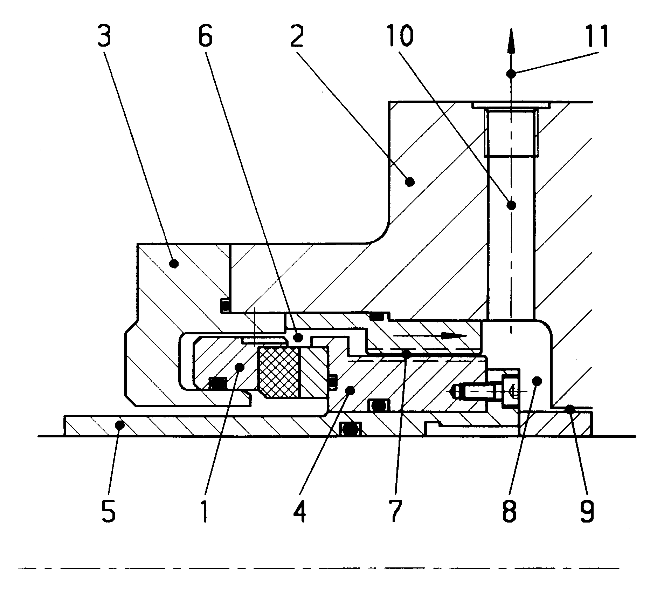

Anhand eines Ausführungsbeispiels wird die Erfindung näher erläutert. Die Zeichnung zeigt eine Schnittdarstellung einer in einer Kesselspeisepumpe angeordneten erfindungsgemäßen Gleitringdichtung.

Die Gleitringdichtung wird gebildet durch einen Gleitring 1, der in einem das Gehäuse 2 der Kesselspeisepumpe abschließenden Deckel 3 angeordnet ist, und einen Gegenring 4, der mit der Welle 5 der Kesselspeisepumpe umläuft.

Einer die Gleitringdichtung 1, 4 umgebenden Dichtungskammer 6 ist eine als Förderschnecke ausgebildete Pumpeinrichtung 7 vorgeschaltet. Die Pumpeinrichtung 7 übt eine Förderwirkung in Richtung eines Raumes 8 aus, der einem den Innenraum der Kesselspeisepumpe abschließenden Drosselspalt 9 nachgeschaltet ist. Die Förderwirkung hat zur Folge, daß in den Bereich der Pumpeinrichtung 7 gelangendes Medium aus dem Inneren der Kreiselpumpe nur unter Druckverlust in die Dichtungskammer 6 zu gelangen vermag. Dieser Druckverlust ist so hoch, daß evtl. noch als Heißwasser in die Pumpeinrichtung 7 gelangendes Medium in die Dampfphase versetzt wird. Somit gelangt in den Dichtspalt zwischen Gleitring 1 und Gegenring 4 allein gasförmiges Medium.

Unterstützend kann hierbei ein gezielt herbeigeführter Druckabfall in der Dichtungskammer 6 wirken. Zu erreichen ist dieser durch eine definierte Leckage der Gleitringdichtung 1, 4.

Über eine im Gehäuse 2 vorgesehene Bohrung 10 und eine daran anschließende - hier nur angedeutete - Leitung 11 wird Entlastungswasser, das sich im Raum 8 ansammelt, zur Saugseite der Kesselspeisepumpe hin abgeführt.

## Patentansprüche

1. Gleitringdichtung für Kesselspeisepumpen zur Förderung von Heißwasser mit einer Temperatur von über 100 °C, **gekennzeichnet durch** eine gasgeschmierte Gleitringdichtung (1, 2), wobei auf eine Kühlung der Gleitringdichtung (1, 2) verzichtet wird und Mittel vorgesehen sind, die auf das abzudichtende Heißwasser in der Weise einwirken, daß es im Bereich der Gleitringdichtung (1, 2) nur noch in Dampfform vorliegt.

2. Gleitringdichtung nach Anspruch 1, gekennzeichnet durch eine zwischen dem Pumpeninneren und der die Gleitringdichtung (1, 2) aufnehmenden Dichtungskammer (6) angeordnete Drosselvorrichtung, deren Leckage kleiner ist als die Leckage der Gleitringdichtung (1, 2).

3. Gleitringdichtung nach Anspruch 1, dadurch gekennzeichnet, daß zwischen der Gleitringdichtung (1, 2) und dem Pumpeninneren eine den Druck in der Dichtungskammer (6) herabsetzende Pumpeinrichtung angeordnet ist.

4. Gleitringdichtung nach Anspruch 3, dadurch gekennzeichnet, daß zwischen der Gleitringdichtung (1, 2) und dem Pumpeninneren eine Förderschnecke (7) vorgesehen ist.

5. Gleitringdichtung nach Anspruch 3, dadurch gekennzeichnet, daß zwischen der Gleitringdichtung (1, 2) und dem Pumpeninneren ein Kreiselpumpenlaufrad vorgesehen ist.

6. Gleitringdichtung nach Anspruch 3, dadurch gekennzeichnet, daß zwischen der Gleitringdichtung (1, 2) und dem Pumpeninneren eine mit Pumpbohrungen versehene Scheibe angeordnet ist.

7. Gleitringdichtung nach Anspruch 1, dadurch gekennzeichnet, daß das Heißwasser vor seinem Übertritt in die Dichtungskammer (6) mittels einer Wärmequelle in den Dampfzustand versetzt wird.

8. Gleitringdichtung nach mehreren der Ansprüche 1 bis 7, gekennzeichnet durch den gleichzeitigen Einsatz von Mitteln zur Temperaturerhöhung und zur Druckabsenkung.
